# EUROPÄISCHE PATENTSCHRIFT

(11) **EP 1 935 706 B1**
(45) Veröffentlichungstag und Bekanntmachung des Hinweises auf die Patenterteilung: **03.10.2012**
(21) Anmeldenummer: 07466028.3
(22) Anmeldetag: 20.12.2007
(51) Int. Cl.: B60N 2/015, B60N 2/02

(54) **Elektrifizierte Sitzbefestigung**
Electrified seat mounting
Fixation de siège électrifiée

(30) Priorität: 22.12.2006 CZ 20060826
(43) Veröffentlichungstag der Anmeldung: 25.06.2008
(73) Patentinhaber: Skoda Auto a.s., 293 60 Mladá Boleslav (CZ)
(72) Erfinder: Minarik, Roman, 460 01 Liberec (CZ); Mlejnek, Vitezslav, 293 01 Mlada Boleslav (CZ)

(56) Entgegenhaltungen:
- EP-A1- 1 655 168
- DE-C1- 10 125 826
- FR-A1- 2 776 591
- US-B1- 6 250 703

## Beschreibung

Die Erfindung betrifft eine Sitzaufhängung, vor allem eines herausnehmbaren Fahrzeugsitzes, mit einem Anschluss der Elektroinstallation des Sitzes an die Elektroinstallation des Fahrzeugs.

### Bisheriger Stand der Technik

Die Sitze moderner Fahrzeuge sind gegenwärtig mit verschiedenen elektrischen Einrichtungen z.B. einem Geber der Sicherheitsgurtbefestigung, der elektrischen Zündung der Sicherheitsgurtstraffer, einer Sitzheizung u.ä. ausgestattet. Bei nicht herausnehmbaren Sitzen ist der Anschluss dieser Systeme zum Bordnetz problemlos mittels der Kabel mit Verbindungsstecker durchführbar, jedoch bei herausnehmbaren Sitzen, welche in Mehrzweckfahrzeuge eingebaut werden, muss die elektrisch-leitfähige Verbindung mittels einer automatischen Verbindung bei einer Sitzinstallation im Fahrzeug und einer Entkoppelung bei der Demontage sichergestellt werden.

Gegenwärtig sind mehrere Lösungen dieses Problems bekannt, z.B. die Lösung beschrieben im Dokument US 6250703 B1, in dem die Aufhängung des Sitzes mit einem Sicherungshaken versehen ist, welcher am Bolzen, angebracht in der Bodenaussparung, befestigt wird, wobei sich der elektrische Kontakt seitens des Fahrzeugs in dieser Aussparung und am Sitz am Sicherungshaken befindet. Bei der Sicherung des Hakens am Bolzen kommt es zur Berührung beider Kontakte. Nach der Demontage des Sitzes kann dieser Kontakt jedoch durch das Beladen von Ladegut im Bereich der Sitze beschädigt werden. Ein eventuelles Hängenbleiben des Kontakts, z.B. durch die Einwirkung von Korrosion, kann es zur unzureichenden Sicherung des Sitzes durch den Sicherungshaken kommen.

Eine weitere bekannte Lösung beschreibt das Dokument DE 101 25 826 C1. Der Sitz ist wiederum mit einer Einhängung mit Sicherungshaken versehen, welcher gegen den Bolzen im Boden einrastet, wobei dieser Bolzen aus Metall besteht und es zum leitenden Anschluss durch die Verbindung dieses Bolzens und des Sicherungshakens kommt. Die Sicherung des Sitzes und auch der elektrischen Verbindung ist in diesem Fall sicher und fähig größere Stromstärken und auch Daten zu übertragen, jede solche Einhängung ist jedoch in der Lage nur ein elektrisches Potential zu übertragen.

### Das Wesentliche der Erfindung

Die aufgeführten Unzulänglichkeiten beseitigt die elektrifizierte Sitzaufhängung des herausnehmbaren Fahrzeugsitzes laut der Erfindung, die eine elektrische Anbindung der Sitzelektroinstallation an die Elektroinstallation des Fahrzeugs sicherstellt. Die Aufhängung bildet ein Bolzen für die Befestigung am Fahrzeugboden, und eine Gabel zur Befestigung am Sitz und ist drehbar, aufsetzbar auf diesen Bolzen. Der Bolzen ist mindestens mit einem Anschlag zur Definition der axialen Gabelposition versehen, wobei mindestens an einem dieser Anschläge mindestens ein erster elektrischer Kontakt angebracht ist, der an die Elektroinstallation des Fahrzeugs angeschlossen werden kann. Die Gabel ist auf der entsprechenden Seite des angepassten Anschlags mindestens mit einem zweiten elektrischen Kontakt versehen, der an die Elektroinstallation des Sitzes angeschlossen werden kann. Der zweite elektrische Kontakt wird bei der Installation des Sitzes in das Fahrzeug automatisch in die elektrische Verbindung mit dem ersten Kontakt eingeschoben.

Der erste elektrische Kontakt befindet sich mindestens am Umfangsbereich des Anschlags, mit dem Vorteil vor allem an dessen Unterseite, wo dieser gut gegen eine Beschädigung oder einen Kurzschluss gesichert ist. Der Anschlag mit Vorteil hat von der Sache her eine Form einer stumpfen Nockenwelle, mit einem nach unten gerichteten Scheitelpunkt. Der Bolzen einschließlich Anschlag ist mindestens teilweise aus elektrisch nicht leitfähigem Material gebildet, z.B. durch den Abguss von Plastik auf einem Metallträger. Der erste elektrische Kontakt und dessen Zuleitung in diesen Kunststoff wenigstens teilweise eingeschmolzen werden so, dass nur der für den Kontakt mit dem zweiten elektrischen Kontakt benötigte Teil freigelegt bleibt.

Der untere Rand der Gabel ist mindestens an einer Seite mit einer Einfassung versehen, senkrecht zum Basisteil der Gabel, wobei sich der zweite elektrische Kontakt auf der oberen Seite der Einfassung befindet. Die Einfassung ist wenigstens im vorderen Teil gekrümmt, wobei die Krümmungsachse die Bolzenachse darstellt so, dass die Einfassung nach dem Einsetzte der Gabel auf den Bolzen und der Drehung, bei einem Einklappen und Ausklappen des Sitzes, sich mit einem konstanten Abstand um den Scheitelpunkt des Anschlags bewegt.

Der vordere Teil der Gabel ist wenigstens teilweise mit einer geformten elektrisch nicht leitenden Abdeckung versehen, mittels dem der zweite elektrische Kontakt an der Gabel, bzw. an der Einfassung befestigt ist. Der zweite elektrische Kontakt kann flexibel angelegt sein, damit ein ausreichender Andruck in der Verbindung mit dem ersten elektrischen Kontakt sichergestellt ist und dadurch auch die Verbindungssicherheit während des Betriebs und Übertragungssicherheit besteht. In der vorteilhaften Ausführung ist der zweite elektrische Kontakt flexibel, welcher mittels der Zuleitung unbeweglich und durch das freie Ende verschiebbar in der Aussparung, gebildet durch die Abdeckung, angebracht ist.

Es ist offenbar, dass wenn die elektrischen Kontakte an beiden Anschlägen des Bolzens angebracht sind, die Gabel mit einer Einfassung mit elektrischen Kontakten an beiden Seiten versehen sein kann. Weiter ist es offenbar, dass an einem Anschlag neben einander mehrere von einander unabhängige elektrische Kontakte angebracht werden können, gegenseitig axial versetzt, übereinstimmend mit der entsprechenden Anzahl elektrischer Kontakte an der Gabel. Die Anzahl dieser Kontakte und deren gegenseitige Entfernungen ist lediglich durch die Breite des Anschlags bzw. der Gabeleinfassung und der Spielgröße der Gabel zwischen zwei Anschlägen, damit es im Betriebszustand nicht zum Kontakt der miteinander nicht übereinstimmenden Kontakte kommen kann, begrenzt. In den oben angeführten Fällen genügt dann die Anwendung von lediglich einer Aufhängung laut der Erfindung für die Übertragung von zwei oder mehr elektrischen Potentialen, wobei die zweite Aufhängung entsprechend der Ersten jedoch ohne Elektrifizierung umgesetzt werden kann.

### Abbildungsübersicht in den Zeichnungen

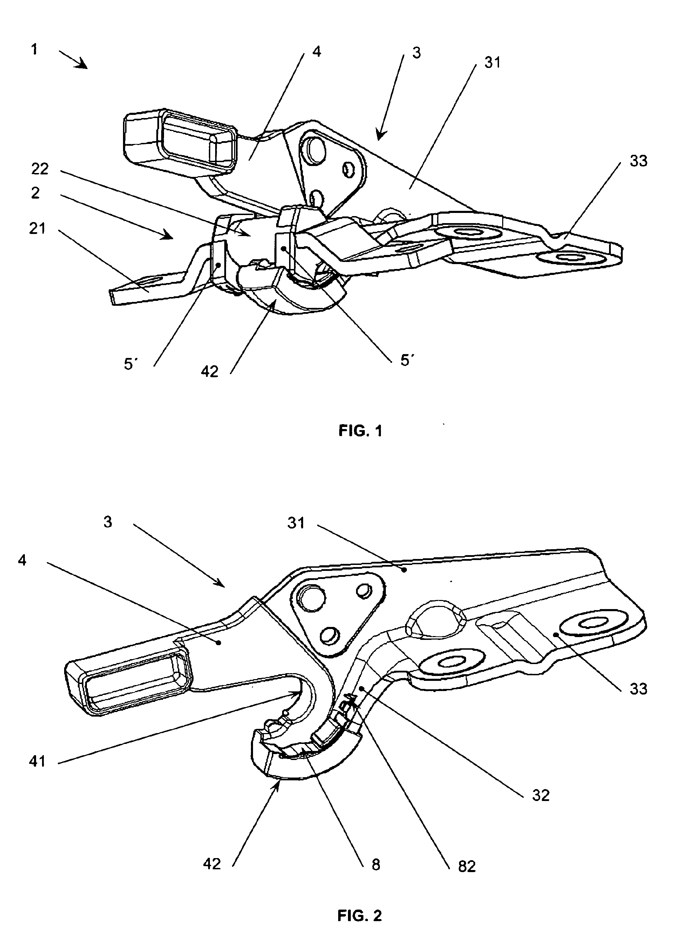

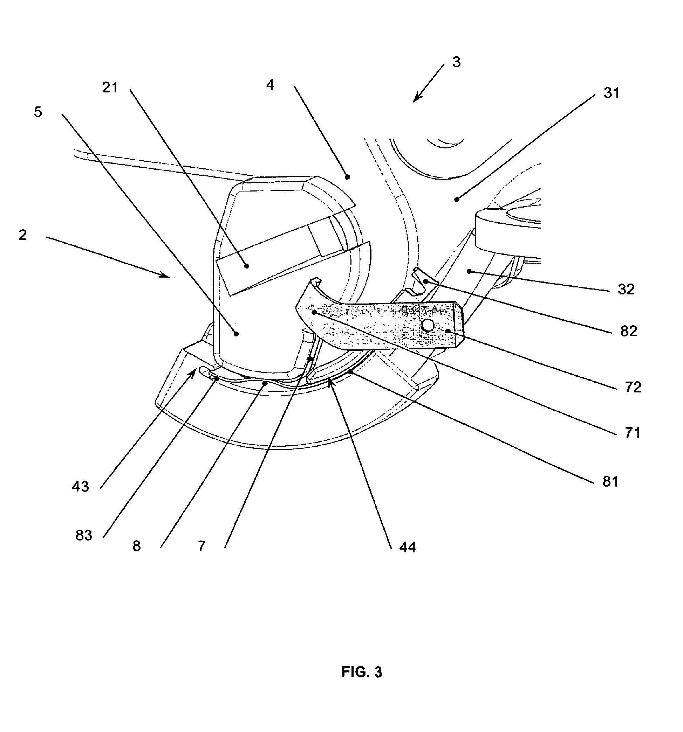

In der Abbildung Nr. 1 befindet sich die Aufhängung laut der Erfindung in der Gesamtansicht in der Position entsprechend der Eindrehung der Gabel gegenüber dem Bolzen in der Gebrauchsposition des Sitzes. In der Abbildung Nr. 2 ist die Gesamtansicht hinsichtlich der eigenständigen Gabel und in der Abbildung 3 befindet sich die Detailansicht der Aufhängungszusammensetzung in der Position entsprechend der Eindrehung der Gabel gegenüber dem Bolzen in der Gebrauchsposition des Sitzes.

### Beispiele der Erfindungsdurchführung

Abbildung Nr. 1 und 3 ist eine Darstellung der Sitzaufhängung laut der Erfindung, typisch eines der Paare der vorderen Sitzaufhängungen, welche im hinteren Bereich mit zwei weiteren Schlössern zur Befestigung an einen Fahrzeugboden dienen. Die Aufhängung umfasst einen waagerechten Bolzen 2, mit gebildeter Auflagefläche 22 für eine Gabel 3. An den Rändern der Auflagefläche 22 bestehen Anschläge 5, 5', welche die Gabel 3 axial gegen einen Versatz auf dem Bolzen sichern, mit der Form einer Nockenwelle mit stumpfem, nach unten gerichtetem, Scheitelpunkt. Der Bolzen 2 ist einschließlich des Anschlags 5, 5' durch Kunststoffdruckguss auf einem Metallträger 21 gebildet, der mit Öffnungen zur Befestigung am Fahrzeugboden versehen ist. Am Umfang des unteren Teils ist der Anschlag 5 mit einem elektrischen Kontakt 7 versehen, gebildet durch ein Metallband, welches durch eine Zuleitung 71 zu einem Verbindungsstecker 72 angeschlossen ist. Der komplette Kontakt 7, einschließlich der Zuleitung 71 und des Verbindungssteckers 72 zum Anschluss an die Elektroinstallation des Fahrzeugs, wird bei der Anfertigung des Bolzens 2 in die Form eingelegt und teilweise in den Kunststoff des Bolzens eingegossen.

Abbildung Nr. 2 ist eine Darstellung der nach vorn geöffneten Gabel 3, diese wird durch den Basisteil 31 gebildet, an dessen unteren Teil eine Einfassung 32 gebildet wird, welche im hinteren Bereich in eine Platte 33 übergeht, welche zur Befestigung der Gabel 3 am Sitz dient. Der vordere Teil der Gabel ist mit einer Plastikabdeckung 4 abgedeckt, welche eine Auflagefläche 41 für den Bolzen 2 und im unteren Teil eine Gleitfläche 42 bildet, die eine Installation der Sitze erleichtert und die Gabel 3 vor einer Beschädigung schützt. Die Einfassung 32 und damit auch die Abdeckung 4 ist im vorderen Teil gekrümmt, wobei die Krümmungsachse die Achse der Auflagefläche 41 bzw. die Bolzenachse 2 darstellt. Auf der Seite des vorderen Einfassungsbereichs 32, ist in der Abdeckung 4 ein elektrischer Kontakt 8 hinterlegt. Dieser elektrische Kontakt 8 wird durch ein Metallband gebildet, welches in der Mitte leicht nach oben gebogen ist, und nach hinten in eine Zuleitung 81 übergeht, unbeweglich eingeführt in einer Halterung/Aussparung 44 in der Abdeckung 4, an deren Ende diese herausragt und in Verbindungsstecker 82 für den Anschluss der Sitzelektroinstallation übergeht. Das vordere freie Ende 83 des Elektrokontakts 8 ist in einer zweiten Halterung/Aussparung 43 eingefasst in der sich dieses bei einem Druck auf die Mitte des elektrischen Kontakts 8 mit dem elektrischen Kontakt 7 bewegen kann.

Bei der Montage des Sitzes, nach dem Einsatz der Gabel 3 auf den Bolzen 2 setzen die Auflagenflächen 41 und 22 aufeinander auf, wobei sich die Gabel 3 mit dem hinteren Teil in aufrechter Lage befindet, denn die hinteren Schlösser des Sitzes sind nicht verschlossen, somit befindet sich der elektrische Kontakt 8 außerhalb der elektrischen Kontakts 7. Nach dem Abklappen des Sitzes in die Gebrauchsposition wird die Gabel 3 gedreht, wobei der elektrische Kontakt 8 in Kontakt mit dem elektrischen Kontakt 7 kommt und dem Verbindungsstecker 82 dasselbe Potential wie dem Verbindungsstecker 72 zugeführt wird. Die perfekte Berührung beider Verbindungsstecker wird durch die Vorspannung des deformierten elektrischen Kontakts 8 garantiert, dessen freies Ende 83 dann tiefer in die Aussparung 43 eingeschoben ist. Nach der Entriegelung der hinteren Sitzschlösser und dem Umklappen des Sitzes nach oben um die Bolzenachse in die nicht gebrauchsfähige Position wird der elektrische Kontakt 8 nach außen gedreht und aus der Verbindung mit dem Kontakt 7 gelöst und die Verbindung ist damit unterbrochen.

### Industrielle Nutzbarkeit

Die elektrifizierte Aufhängung des Sitzes laut der Erfindung, kann bei allen Automobilen mit herausnehmbaren Sitzen, ausgestattet mit einer beliebigen Anzahl von Einrichtungen, Verwendung finden.

## Patentansprüche

1. Elektrifizierte Sitzaufhängung (1), insbesondere eines herausnehmbaren Fahrzeugsitzes, mit einem Anschluss der Elektroinstallation des Sitzes an die Elektroinstallation des Fahrzeugs beinhaltend:
- einen Bolzen (2) fixierbar am Fahrzeugboden,
- eine Gabel (3) fixierbar am Sitz und drehbar aufsetzbar auf den Bolzen (3),
- einen ersten elektrischen Kontakt (7) anschließbar an die Elektroinstallation des Fahrzeugs,
- einen zweiten elektrischen Kontakt (8) anschließbar an die Elektroinstallation des Sitzes, wobei dieser zweite elektrische Kontakt (8) sich automatisch als elektrisch leitende Verbindung mit dem ersten Kontakt (7) bei der Installation des Sitzes in das Fahrzeug einschiebt,
dadurch e.l. gekennzeichnet, dass der Bolzen (2) mindestens mit einem Anschlag (5, 5') für die axiale Positionierung der Gabel (3) versehen ist, wobei mindestens an einem der Anschläge (5, 5') mindestens ein erster elektrischer Kontakt (7) angebracht ist, und die Gabel (3) mindestens mit einem zweiten elektrischen Kontakt (8) auf der Seite des zugehörigen Anschlags (5, 5') versehen ist.

2. Elektrifizierte Sitzaufhängung (1) nach Anspruch 1 **kennzeichne t sich dadurch** , dass der erste elektrische Kontakt (7) sich mindestens am Umfangsteil des Anschlags (5, 5'), vor allem an dessen Unterseite befindet.

3. Elektrifizierte Sitzaufhängung (1) nach Anspruch 1 oder 2 **kennzei chnet sich dadurch** , dass der Anschlag (5, 5') die Form einer stumpfen Nockenwelle mit nach unten gerichtetem Scheitelpunkt vorweist.

4. Elektrifizierte Sitzaufhängung (1) nach einem der vorangegangenen Anspruche **kennzeichnet sich dadurch**, dass der Bolzen (3) einschließlich Anschlag (5, 5') wenigstens teilweise aus Kunststoff gebildet wird, in den der erste Kontakt (7) und / oder die Zuleitung (71) wenigstens teilweise eingeschmolzen sind.

5. Elektrifizierte Sitzaufhängung (1) nach einem der vorangegangenen Ansprüch **kennzeichnet sich dadurch** , dass der untere Rand der Gabel (3) an einer Seite mit einer Einfassung (32) versehen ist, senkrecht zueinem vertikalen Basisteil (31) der Gabel (3), wobei sich der zweite elektrische Kontakt (8) mindestens an der Oberseite dieser Einfassung (32) befindet.

6. Elektrifizierte Sitzaufhängung (1) nach Anspruch Anforderung 5 **kennzeichnet sich dadurch**, dass die Einfassung (32) mindestens im vorderen bereich gekrümmt ist, wobei die Krümmungsachse die Bolzenachse darstellt.

7. Elecktriefizierte Sitzaufhängung (1) nach einem der vorangegangenen Anspruche **kennzeichnet sich dadurch** , dass der vordere Bereich der Gabel (3) mindestens teilweise mit einer geformten elektrisch nicht leitenden Abdeckung (4) versehen ist, mittels derer der zweite elektrische Kontakt (8) an der Gabel (3) befestigt ist.

8. Elektrifizierte Sitzaufhängung (1) nach einem der vorangegangenen Anprüche **kennzeichnet sich dadurch** , dass der zweite elektrische Kontakt (8) flexibel ist oder flexibel befestigt ist.

9. Elektrifizierte Sitzaufhängung (1) nach Anspruch 7 **kennzeichne t sich dadurch** , dass der zweite elektrische Kontakt (8) mit einer Zuleitung (81) unbeweglich in einer Aussparung (44) in der Abdeckung (4)und mit einem freien Ende (83) verschiebbar in eine aweiten Aussparung (43) in der Abdeckung (4) befestigt ist.

10. System einer elektrifizierten Sitzaufhängung **kennzeichnet sich** da **durch** , dass ein Sitz im vorderen Teil mindestens mit einer elektrifizierten sitzaufhängung nach einem der vorangegangenen Ansprüche versehen ist.

## Claims

1. Electrified seat suspension (1), in particular of a removable vehicle seat, having a connection of the electrical installation of the seat to the electrical installation of the vehicle, comprising:
- a pin (2) which can be fixed to the vehicle floor,
- a prong (3) which can be fixed to the seat and can be rotatably mounted on the pin (2),
- a first electrical contact (7) which can be connected to the electrical installation of the vehicle,
- a second electrical contact (8) which can be connected to the electrical installation of the seat, wherein this second electrical contact (8) automatically slides in as an electrically conductive connection to the first contact (7) when the seat is installed in the vehicle,
**characterized in that** the pin (2) is provided at least with a stop (5, 5') for axially positioning the prong (3), wherein at least a first electrical contact (7) is fitted at least to one of the stops (5, 5'), and the prong (3) is provided at least with a second electrical contact (8) on the side of the associated stop (5, 5').

2. Electrified seat suspension (1) according to Claim 1 is **characterized in that** the first electrical contact (7) is located at least on the peripheral part of the stop (5, 5'), primarily on its lower face.

3. Electrified seat suspension (1) according to Claim 1 or 2 is **characterized in that** the stop (5, 5') has the shape of a blunt camshaft with a vertex which is directed downward.

4. Electrified seat suspension (1) according to one of the preceding claims is **characterized in that** the pin (2), including the stop (5, 5'), is formed at least partially from plastic in which the first contact (7) and/or the feed line (71) are at least partially fused.

5. Electrified seat suspension (1) according to one of the preceding claims is **characterized in that** the lower edge of the prong (3) is provided with a holder (32) on one side, perpendicular to a vertical base part (31) of the prong (3), wherein the second electrical contact (8) is located at least on the upper face of this holder (32).

6. Electrified seat suspension (1) according to Claim 5 is **characterized in that** the holder (32) is curved at least in the front region, wherein the axis of curvature represents the pin axis.

7. Electrified seat suspension (1) according to one of the preceding clams is **characterized in that** the front region of the prong (3) is provided at least partially with a shaped electrically non-conducting cover (4) by means of which the second electrical contact (8) is mounted on the prong (3).

8. Electrified seat suspension (1) according to one of the preceding claims is **characterized in that** the second electrical contact (8) is flexible or is flexibly mounted.

9. Electrified seat suspension (1) according to Claim 7 is **characterized in that** the second electrical contact (8) is mounted in an immobile manner in a cutout (44) in the cover (4) by way of a feed line (81) and in a displaceable manner in a second cutout (43) in the cover (4) by way of a free end (83).

10. System of an electrified seat suspension is **characterized in that** a seat is provided at least with an electrified seat suspension according to one of the preceding claims in the front part.

## Revendications

1. Suspension de siège électrifiée (1), notamment d'un siège de véhicule amovible, comprenant un raccordement de l'installation électrique du siège à l'installation électrique du véhicule, comportant :
- un boulon (2) pouvant être fixé au plancher du véhicule,
- une fourche (3) pouvant être fixée au siège et pouvant être montée tournante sur le boulon (2),
- un premier contact électrique (7) pouvant être raccordé à l'installation électrique du véhicule,
- un second contact électrique (8) pouvant être raccordé à l'installation électrique du siège, ce second contact électrique (8) s'insérant automatiquement en tant que connexion électriquement conductrice au premier contact (7) lors de l'installation du siège dans le véhicule,
**caractérisé en ce que** le boulon (2) est muni d'au moins une butée (5, 5') destinée au positionnement axial de la fourche (3), au moins un premier contact électrique (7) étant fixé à au moins l'une des butées (5, 5') et la fourche (3) étant munie d'au moins un second contact électrique (8) du côté de la butée associée (5, 5').

2. Suspension de siège électrifiée (1) selon la revendication 1, **caractérisée en ce que** le premier contact électrique (7) se trouve au moins dans la partie périphérique de la butée (5, 5'), principalement sur sa face inférieure.

3. Suspension de siège électrifiée (1) selon la revendication 1 ou 2, **caractérisée en ce que** la butée (5, 5') présente la forme d'un arbre à cames arrondies dont le sommet est dirigé vers le bas.

4. Suspension de siège électrifiée (1) selon l'une quelconque des revendications précédentes, **caractérisée en ce que** le boulon (2), y compris la butée (5, 5'), est constitué au moins en partie de matière plastique dans laquelle sont au moins partiellement fusionnés le premier contact (7) et/ou la ligne d'alimentation (71).

5. Suspension de siège électrifiée (1) selon l'une quelconque des revendications précédentes, **caractérisée en ce que** le bord inférieur de la fourche (3) est muni sur un côté d'une jupette (32) perpendiculaire à une partie de base verticale (31) de la fourche (3), le second contact électrique (8) se trouvant au moins sur la face supérieure de cette jupette (32).

6. Suspension de siège électrifiée (1) selon la revendication 5, **caractérisée en ce que** la jupette (32) est incurvée au moins dans la région avant, l'axe de courbure représentant l'axe du boulon.

7. Suspension de siège électrifiée (1) selon l'une quelconque des revendications précédentes, **caractérisée en ce que** la région avant de la fourche (3) est munie au moins en partie d'un capot non électriquement conducteur moulé (4) au moyen duquel le second contact électrique (8) est fixé à la fourche (3).

8. Suspension de siège électrifiée (1) selon l'une quelconque des revendications précédentes, **caractérisée en ce que** le second contact électrique (8) est souple ou est fixé de manière souple.

9. Suspension de siège électrifiée (1) selon la revendication 7, **caractérisée en ce que** le second contact électrique (8) est fixé de manière à être immobilisé avec une ligne d'alimentation (81) dans un évidement (44) ménagé dans le capot (4) et de manière à pouvoir coulisser avec une extrémité libre (83) dans un second évidement (43) ménagé dans le capot (4).

10. Système d'une suspension de siège électrifiée, **caractérisé en ce qu'**un siège est prévu dans la partie avant d'au moins une suspension de siège électrifiée selon l'une quelconque des revendications précédentes.
